# EUROPÄISCHE PATENTSCHRIFT

(11) **EP 1 421 666 B1**
(45) Veröffentlichungstag und Bekanntmachung des Hinweises auf die Patenterteilung: **11.10.2006**
(21) Anmeldenummer: 02764559.7
(22) Anmeldetag: 30.08.2002
(51) Int. Cl.: H02K 5/24, B63H 23/24, H02K 15/00

(54) **SCHOCKFESTE ELEKTRISCHE SCHIFFSMASCHINE, Z.B. MOTOR ODER GENERATOR**
SHOCK-PROOF ELECTRIC MARINE ENGINE, E.G. ENGINE OR GENERATOR
GROUPE DE VAISSEAU ELECTRIQUE RESISTANT AUX CHOCS, PAR EX. MOTEUR OU GENERATEUR

(30) Priorität: 30.08.2001 DE 10143713; 29.05.2002 DE 10224014
(43) Veröffentlichungstag der Anmeldung: 26.05.2004
(73) Patentinhaber: SIEMENS AKTIENGESELLSCHAFT, 80333 München (DE)
(72) Erfinder: BRACH, Karsten, 13589 Berlin (DE); HOFMANN, Thomas, 14624 Dallgow-Döberitz (DE); KRÜGER-GOTZMANN, Manfred, 10589 Berlin (DE); MEYER, Christian, 13591 Berlin (DE); SCHILLER, Christian, 12277 Berlin (DE); VOGELEY, Peter, 14612 Falkensee (DE); WILCKE, Ralf, 13351 Berlin (DE); HEIN, Peter, 16835 Ruethnick (DE)
(86) Internationale Anmeldenummer: PCT/DE2002/003242
(87) Internationale Veröffentlichungsnummer: WO 2003/023941

(56) Entgegenhaltungen:
- EP-A- 0 533 359
- EP-A- 1 010 614
- WO-A-02/30742
- DE-A- 19 648 417
- DE-C- 595 012
- US-A- 4 040 378

## Beschreibung

Die Erfindung bezieht sich auf eine schockfeste elektrische Schiffsmaschine, z.B. einen Motor oder Generator, für ein Marine(Navy)-Schiff, die einen Stator und einen Rotor in einem Gehäuse aufweist, wobei der Rotor mit einer Antriebswelle verbunden ist.

Vibrationsgedämpfte elektrische Schiffsmaschinen, z.B. Motoren, sind bekannt, so etwa aus der WO 02/30742 A1. Zur Vibrationsdämpfung weisen die bekannten Motoren eine Abstützung von Rotor und Stator aufeinander und eine Abstützung des Stators über vibrationsdämpfende Federelemente an dem Motorgehäuse auf.

Die bekannte Konstruktion ergibt bereits eine Entkoppelung von Gehäuse und Rotor-Stator-Einheit, die jedoch für Marine(Navy)-Schiffe im Trefferfall nicht ausreichend ist. Hier muß nicht nur eine Vibration sondern es müssen hohe Schockbeschleunigungen aufgenommen und abgebaut werden können, die ein Ausweichen der von Stator und Rotor gebildeten Einheit in wesentlich weiteren Grenzen erlaubt, als es die bekannten Vibrationsdämpfungselemente ergeben.

Aus der DE 19648417 A1 ist eine elektrische Schiffsmaschine bekannt, die einen Stator und einen Rotor in einem Gehäuse aufweist, wobei der Rotor mit einer Antriebswelle verbunden ist. Der Stator ist hierbei ohne elastische Zwischenelemente mit dem Gehäuse verbunden und auf der Antriebswelle gelagert. Der Rotor besteht aus einem rohrartigen Tragkörper und einem auf dem Tragkörper aufgesetzten Aktivteil, wobei der Tragkörper auf der Antriebswelle elastisch abgestützt ist. Insgesamt ist somit der Rotor gegenüber dem Gehäuse und dem Stator beweglich, wodurch eine von der Antriebswellendurchbiegung unabhängige Zentrierung des Rotors innerhalb des Stators erreicht, was Vorteile hinsichtlich des dynamischen Verhalten des Rotors innerhalb der Maschine (z.B. Minimierung vom Körperschallemissionen) mit sich bringt. Bei Schockbelastungen kann jedoch der Rotor am Stator anschlagen.

Ausgehend hiervon ist es Aufgabe vorliegender Erfindung, eine elektrische Schiffsmaschine anzugeben, bei der Schockbeschleunigungen nicht zu einem Anschlagen des Rotors am Stator führen.

Diese Aufgabe wird durch eine elektrische Schiffsmaschine mit den Merkmalen des Patentanspruchs 1 gelöst.

Durch die vorgeschlagenen Maßnahmen können Schockbeschleunigungen des Gehäuses oder von anderen Schiffsteilen von über 100 g ertragen werden und führen nicht zu einem Anschlagen von Rotor und Stator im Betrieb. Dieses Anschlagen ist das Kritische bei einer Schockbeschleunigung; die Bauteile an sich halten Beschleunigungen von über 100 g aus. Zum Abbau der Schockbeschleunigungen sind Ausweichwege von mehreren Millimetern, im Extremfall von einige Zentimetern, notwendig und werden erreicht.

In Ausbildung der schockfesten elektrischen Schiffsmaschine ist im Besonderen vorgesehen, dass der Motor an der Unterseite eines Schiffsrumpfs in einem gondelartig ausgestalteten strömungsgünstigen Gehäuse angeordnet ist, wobei an die mit dem Rotor verbundene Antriebswelle wenigstens ein Propeller angekoppelt ist, und wobei der Stator über Drehlager am Rotor fixiert ist, und dass sich die aus Stator und Rotor gebildete Baueinheit sowohl am Gehäuse als auch auf der Antriebswelle elastisch abstützt und wobei zwischen Rotor und Stator ein Luftspalt von bis zu ca. 50 mm ausgebildet ist.

Eine elektrische Schiffsmaschine in einem elektrischen Ruderpropeller ist besonders hohen Schockbeschleunigungen ausgesetzt, da u.U. direkt unter dem elektrischen Ruderpropeller eine Mine oder ein Torpedo explodieren kann. Auch für diesen Fall, der Beschleunigungen von deutlich über 100 g für das Ruderpropellergehäuse bedeutet, muß der schockfeste elektrische Schiffsantrieb weiter in Betrieb bleiben, dies erfolgt durch die vorstehend angegebenen Maßnahmen in Verbindung mit der vorgesehenen elastischen Verbindung von Ruderpropeller und Schiffsheck.

In anderer Ausgestaltung der Erfindung ist vorgesehen, dass das Gehäuse im Schiffsinneren auf einem elastisch aufgestellten Grundrahmen angeordnet ist, wobei die Antriebswelle eine elastische Kupplung zu einer Propellerwelle oder einer Waterjet-Impellerwelle aufweist. So ergibt sich eine Ausbildung einer Schiffsmaschine, die auch im Inneren des Schiffes aufgestellt, z.B. einer Minenexplosion oder dem Einschlag eines, starke Erschütterungen im Schiff auslösenden Flugkörpers widerstehen kann. So kommt es nicht zu einem Generatorausfall, falls die schockfeste elektrische Schiffsmaschine als Generator ausgebildet ist. Es ergibt sich also sowohl für die im Inneren ausgebildete elektrische Schiffsmaschine als auch die in einem elektrischen Ruderpropeller angeordnete Schiffsmaschine gegenüber dem Schiffsrumpf eine doppelte Elastizität. Bei dem elektrischen Ruderpropeller wird sie durch einen ausweichfähig elastischen Ruderpropellerschaft erreicht und bei im Inneren des Schiffes aufgestellter Maschine durch den elastischen Grundrahmen. In allen Fällen ergibt sich eine sowohl große Schockwellen als auch Rückfederungen ohne weiteres ertragende Konstruktion einer schockfesten elektrischen Schiffsmaschine.

Durch die Aufteilung des Rotors in einen rohrartigen Tragkörper und einen auf den Tragkörper aufgesetzten Aktivteil, der sich auf der Antriebswelle elastisch stützt, wobei der Stator auf dem Tragkörper des Rotors gelagert ist und sich am Gehäuse elastisch abstützt, ergibt sich die erfindungsgemäß wichtige Baueinheit. Diese erlaubt die wesentliche gemeinsame Ausweichbewegung von Rotor und Stator unter Schockbeschleunigung.

Die Abstützung des Rotors auf der Antriebswelle erfolgt in axialer und radialer Richtung weich und in Umfangsrichtung drehmomentsteif. Die Lager sind je nach Anforderung als Wälzlager oder als Gleitlager ausgebildet. So ergibt sich eine erfindungsgerecht steife Konstruktion, wobei Gleitlager verwendet werden, wenn mit besonders hohen Schockbeschleunigungen gerechnet werden muß.

Der erfindungsgemäße elektrische Motor oder Generator ist durch seine elastisch federnde Anbringung oder Aufstellung bereits gut körperschallgedämpft, es ergibt sich jedoch noch eine Ortungsmöglichkeit durch gegnerische Kräfte über die Infrarotabstrahlung. Um diese zu verringern und auch um den Motor trotz kleinem Querschnitt hoch belastbar zu machen, ist vorgesehen, dass der Motor flüssigkeitsgekühlt ausgebildet ist. Die Wasserkühlung wird dabei vorteilhaft mit einer üblichen Rückkühlung versehen.

Zur Wasserkühlung des schockfesten Motors wird vorteilhaft der Stator als Kühlvorrichtung ausgebildet, wobei das Kühlwasser den Stator über Kühlkanäle durchströmt. Die Kühlkanäle können als Radialkanäle ausgebildet sein, so ergibt sich eine besonders wirksame Kühlung, aber auch als Umfangskanäle, die meanderförmig auf dem Umfang des Stators verlaufen, eine besonders einfache Lösung, und auch als Axialkanäle, die den Stator längs durchsetzen. Auch hier ist die Kühlung besonders wirksam. Insgesamt ergibt sich eine wesentliche Verringerung der IR-Abstrahlung, wichtig insbesondere für die Ruderpropellerantriebsmaschine, als auch eine erhöhte Belastbarkeit bei kleiner Baugröße im Vergleich zur einfacheren Luftkühlung.

Es ist erfindungsgemäß vorgesehen, dass die Kühlkanäle zumindest eine Wasserkammer aufweisen, die als Verteiler wirkt. So können die einzelnen Kühlkanäle mit Kühlwasser versorgt werden, ohne dass eine Vielzahl von Einzelanschlüssen im Motor oder Generator vorhanden sein muß.

In weiterer Ausgestaltung der Erfindung ist vorgesehen, dass der Stator eine Wicklung mit Wickelköpfen aufweist, die von Kühlluft umströmt werden. So wird sehr vorteilhaft auch der Teil des Stators gekühlt, der nicht von Kühlkanälen kühltechnisch erfaßt wird. Zwar sind auch für die Wickelköpfe Kühlkanäle möglich, die die Wickelköpfe durchziehen oder den Wickelkopf umfangen, hier sind jedoch die konstruktiven Schwierigkeiten, insbesondere für eine schockgedämpfte Maschine, groß, so dass davon in der Regel Abstand genommen wird. Es bietet sich also als Kühlung eine Luftumströmung der Wickelköpfe an, die mit einem Rückkühler im Schiff oder an Deck in Verbindung steht. Durch die Luft-Wickelkopfkühlung braucht vorteilhaft die Baugröße der Maschine nicht verändert werden, im Wickelkopfbereich ist freier Raum vorhanden.

Eine besonders vorteilhafte Ausbildung der schockfesten elektrischen Maschine ergibt sich, wenn diese als permanenterregte Maschine ausgebildet ist. Dann ergibt sich eine besonders einfach aufgebaute Maschine, deren Rotor keine Schleifringe etc. aufweist. Rotor und Stator können so einfach als in sich kompakte, relativ weit voneinander zu beabstandende Einheiten ausgebildet werden, wobei der Stator als Luftspaltwicklung ausgebildet sein kann. Insgesamt ergibt sich insbesondere für einen elektrischen Ruderpropellermotor eine besonders robuste, schockfeste Ausbildung.

Für elektrische Motoren dieser Bauart, die im Schiff aufgestellt sind, ist vorteilhaft vorgesehen, dass der Stator über Gleitsteine im Gehäuse drehbar ausgebildet ist, z.B. mittels eines drehbeweglichen Ständerjochs. So können, ohne die Maschine vollständig demontieren zu müssen, u.U. notwendige Reparaturen, z.B. am Kühlsystem, durchgeführt werden, ohne dass die Maschine als Ganzes ausgebaut und zerlegt werden muß. Dies ist insbesondere für eine schockfeste elektrische Schiffsmaschine für ein Marine(Navy)-Schiff von Vorteil, da so Werftliegezeiten vermieden werden können. Arbeiten am Stator erfordern keinen Ausbau der Maschine.

Die Erfindung wird anhand von Zeichnungen näher erläutert, aus denen, ebenso wie aus den Unteransprüchen, auch weitere erfinderische Vorteile entnehmbar sind.

Im Einzelnen zeigen:
- FIGUR 1: eine Antriebseinrichtung in schematischer Darstellung im Längsschnitt,
- FIGUREN 2 und 3: eine konstruktive Ausgestaltung für die Anordnung gemäß FIGUR 1,
- FIGUR 4: eine erfindungsgemäße Maschine mit axial durchströmten Stator,
- FIGUR 5: eine erfindungsgemäße Maschine mit einer UmfangsKühlung des Stators,
- FIGUR 6: der Strömungsverlauf für eine Umfangskühlung gemäß FIGUR 5, und die
- FIGUREN 7 und 8: Maschinen mit drehbarem Ständerjoch in gekühlter Ausführung, wobei die erfindungsgemäßen Maßnahmen zur Erzielung der Schockfestigkeit jedoch nicht dargestellt sind.

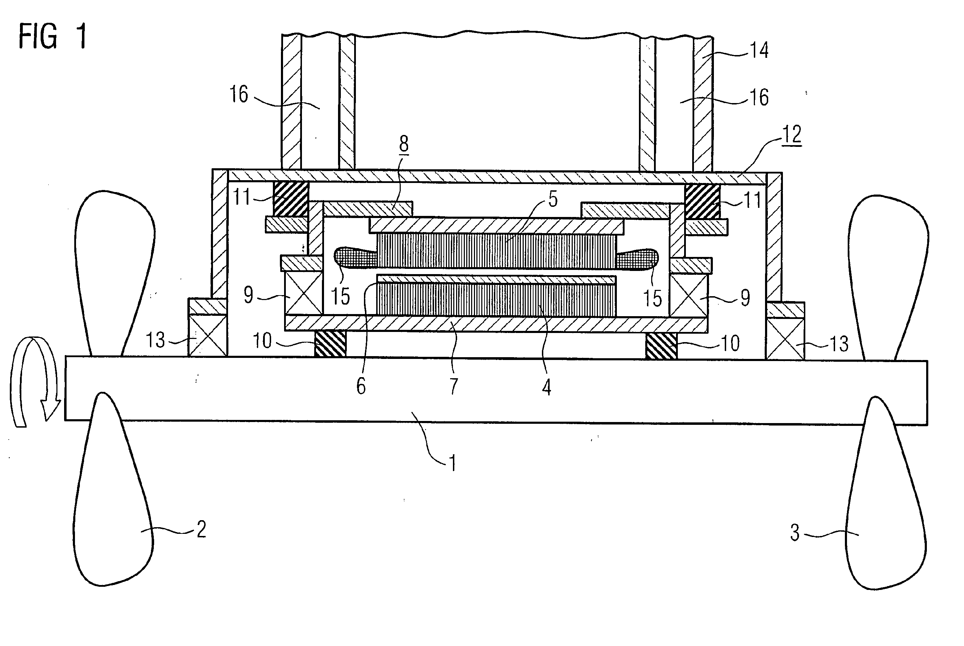

FIGUR 1 zeigt die Antriebswelle 1 eines Motors oder Rohrgenerators für eine Marine(Navy)-Schiffsmaschine, wobei die Antriebswelle 1 an jedem Ende einen Propeller 2 bzw. 3 trägt. Von dem die Antriebswelle 1 antreibenden Elektromotor ist nur die obere Hälfte im Schnitt dargestellt. Dieser Elektromotor besteht aus einem Rotor 4 und einem Stator 5, wobei der Rotor eine elektromagnetisch aktive Schicht 6 in Form von Permanentmagneten aufweist und auf einem rohrartigen Tragkörper 7 angeordnet ist. Der Stator 5 weist ein mehrteiliges Traggehäuse 8 auf, welches über Drehlager 9 am Tragkörper 7 des Rotors fixiert ist.

Die aus Rotor 5 und stator 6 bestehende Baueinheit stützt sich mittels elastischer Dämpfungselemente 10, 11 zum einen an der Antriebswelle 1 und zum anderen an einem den Elektromotor und die Antriebswelle aufnehmenden Gehäuse 12 ab. Die Antriebswelle 1 ist dabei über Drehlager 13 in dem Gehäuse 12 gelagert.

Dem Gehäuse 12 ist ein Tragschacht (Schaft) 14 zur Befestigung der Antriebseinrichtung am Rumpf eines Schiffes zugeordnet. Der Tragschacht 14 kann doppelwandig ausgebildet oder mit vertikal umlaufenden Kühlkanälen 16 versehen sein, beispielsweise zur Führung von Kühlluft. Der Tragschacht 14 ist im allgemeinen als drehbarer Schaft ausgebildet, mit dem das Schiff gesteuert wird. Zur Kühlung des Stators 5, insbesondere der Wickelköpfe 15, kann beispielsweise an dem einen Ende des Elektromotors Kühlluft aus dem Tragschacht 14 in den Innenraum zwischen Traggehäuse 8 und Tragkörper 7 eingespeist und am anderen Ende des Elektromotors abgeführt werden. Die Kühlluft könnte innerhalb des Elektromotors zwischen der elektromagnetisch aktiven Schicht 6 des Rotors und dem Tragkörper 7 in Achsrichtung strömen. Zur Kühlung des Stators bzw. der Statorwicklungen könnte das Statorgehäuse 8 Strömungskanäle aufweisen, die von aus dem Tragschacht 14 zugeführten Kühlwasser durchströmt werden.

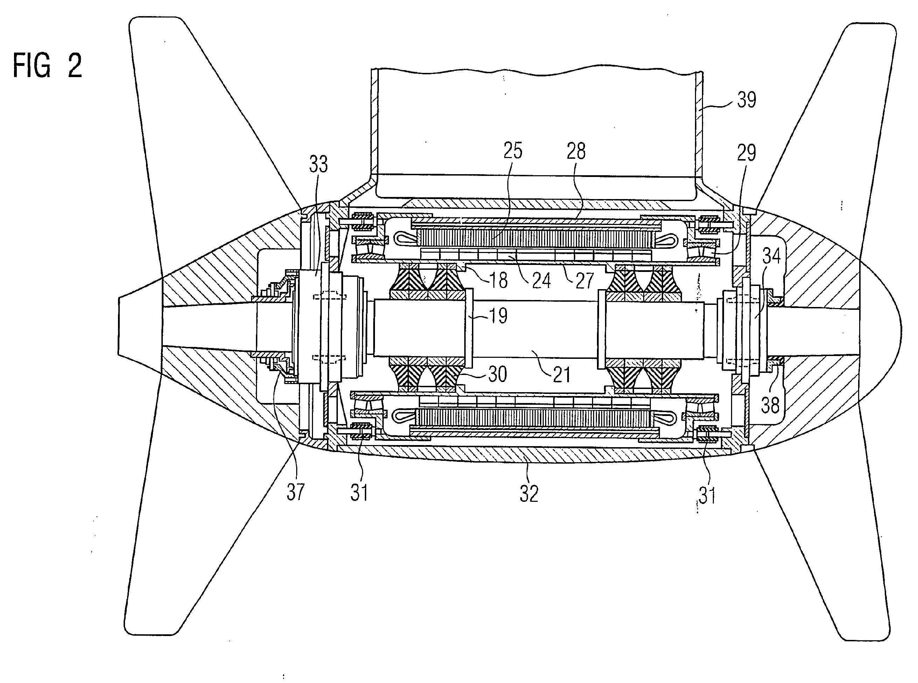

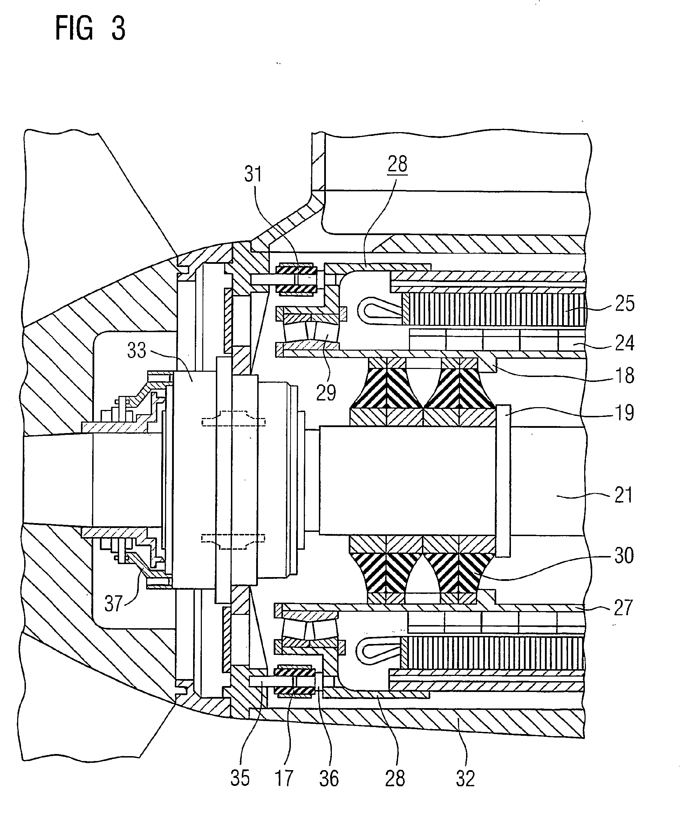

Gemäß FIGUR 2 und dem etwas vergrößerten Ausschnitt gemäß FIGUR 3 ist der aus Rotor 24 und Stator 25 bestehende Elektromotor in einem strömungsgünstig gestalteten Gehäuse 32 angeordnet, welches mittels des Tragschachtes 39 gondelartig unterhalb eines Schiffsrumpfes positionierbar ist. Das Traggehäuse 28 des Stators ist über Drehlager 29, die als Schrägwälzlager ausgebildet sind, am Tragkörper 27 des Rotors 24 fixiert. Dieser Tragkörper stützt sich über Dämpfungselemente 30 elastisch an der Antriebswelle 21 ab. Die Dämpfungselemente 30 sind dabei in Ringflanschen 18, 19 axial fixiert.

Das Traggehäuse 28 des Stators stützt sich über Dämpfungselemente 31 am Gehäuse 32 ab. Diese Dämpfungselemente bestehen jeweils aus einem Gummikörper 17, der über Bolzen 35,' 36 mechanisch mit dem Tragkörper 28 und dem Gehäuse 32 gekoppelt ist. Die den Rotor tragende Antriebswelle 21 ist mittels Gleitlagern 33, 34 im Gehäuse 32 gelagert. Die Gleitlager sind dabei mittels Dichteinrichtungen 37, 38 gegen das umgebende Wasser abgedichtet.

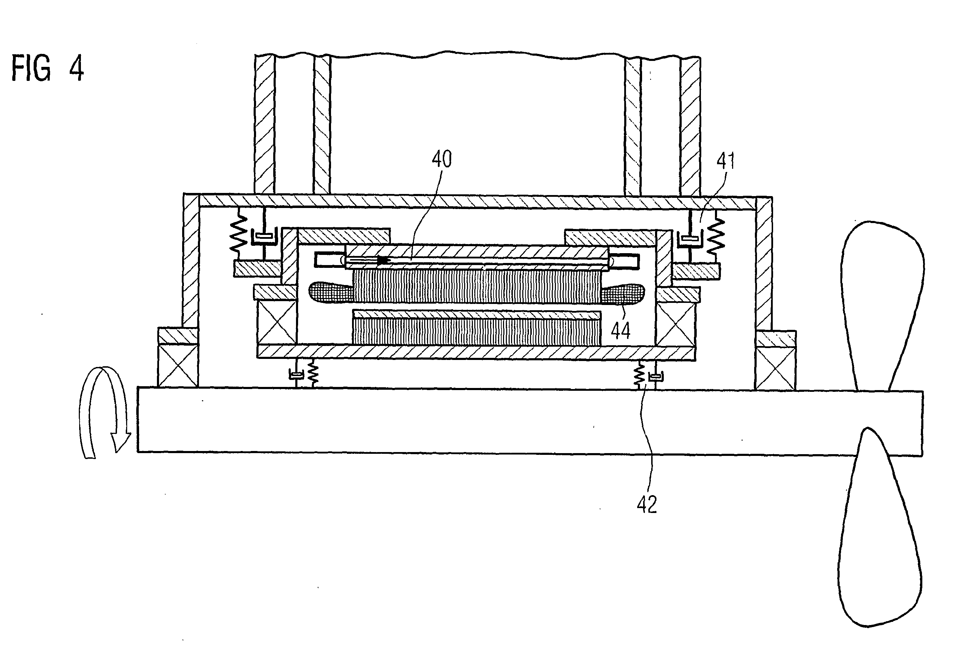

In FIGUR 4 bezeichnet 40 einen Axialkühlkanal. Dieser wird von rückgekühltem Kühlwasser durchströmt, das vorteilhaft die im Motor oder Generator - eine entsprechende Ausführung ist auch für Generatoren möglich - entwickelte Wärme abführt, so dass der Motor oder Generator keine hohe Oberflächentemperatur annimmt.

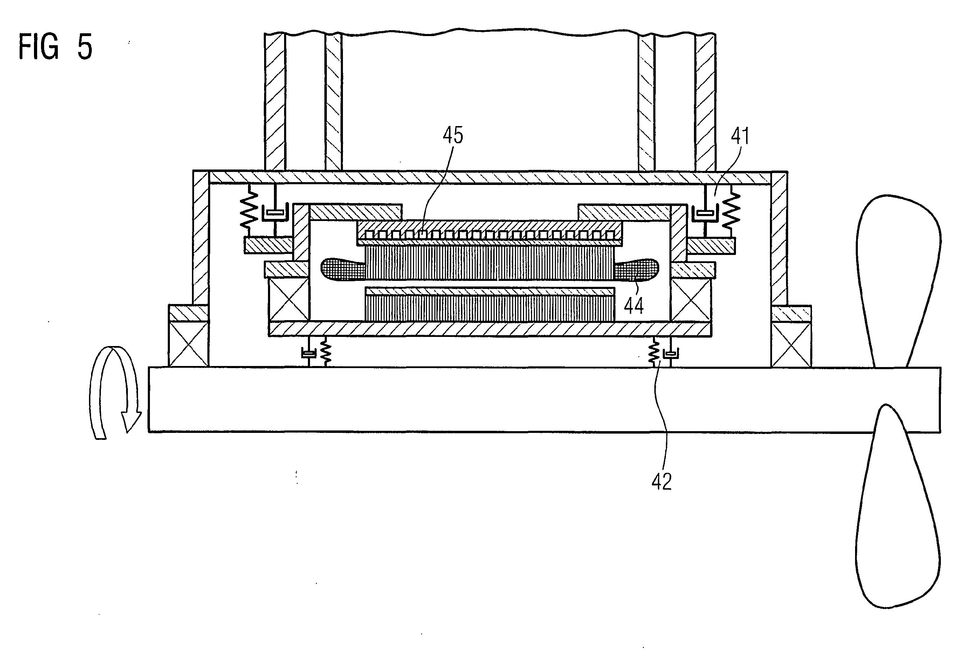

Dem gleichen Zweck dienende Kühlkanäle sind in FIGUR 5 mit 45 bezeichnet. Der Wickelkopf 44 ist jeweils, wie bereits geschildert, durch Luft gekühlt. Die Maschinen weisen zur Abfederung und gleichzeitigen Dämpfung der eingeleiteten Bewegungen Feder-Dämpferelemente 42 auf, die insbesondere aus elastomerem Material oder aus Gummi bestehen. Als geeignete Elemente können die Elemente aus hochelastischen Kupplungen, z.B. aus der Kupplung SPIROFLEX KS der Firma Rexroth, benutzt werden. Sie sind sowohl mechanisch hoch belastbar als auch mit den gewünschten Dämpfungs- und Federungseigenschaften versehen.

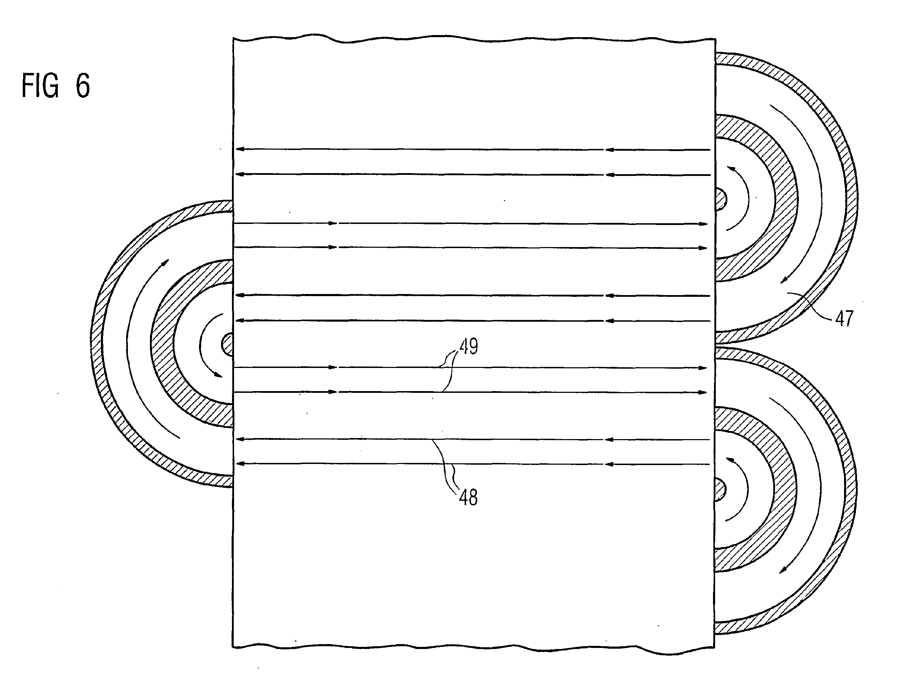

Die Durchströmung von insbesondere außen am Stator angeordneten Kühlkanälen wird in FIGUR 6 gezeigt. Über Umlenkkanalstücke 47 wird das Kühlwasser in Gegenstrombewegungen 48, 49 gebracht. So ergibt sich eine gleichmäßige Kühlung über die Statoroberfläche, die in Verbindung mit den luftgekühlten Wickelköpfen zur Vermeidung von Wärmenestern im Motor oder Generator führt.

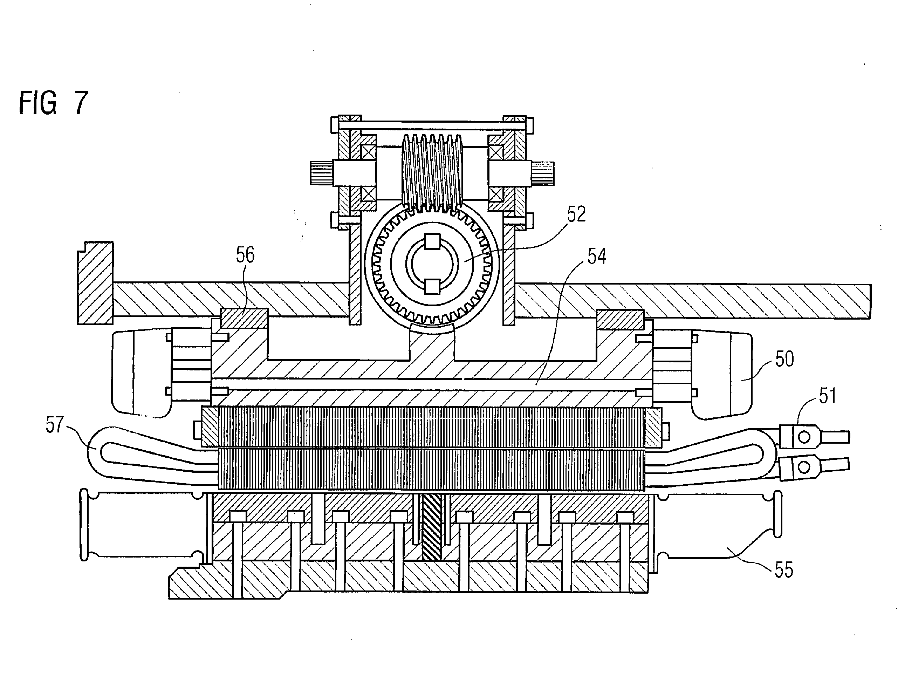

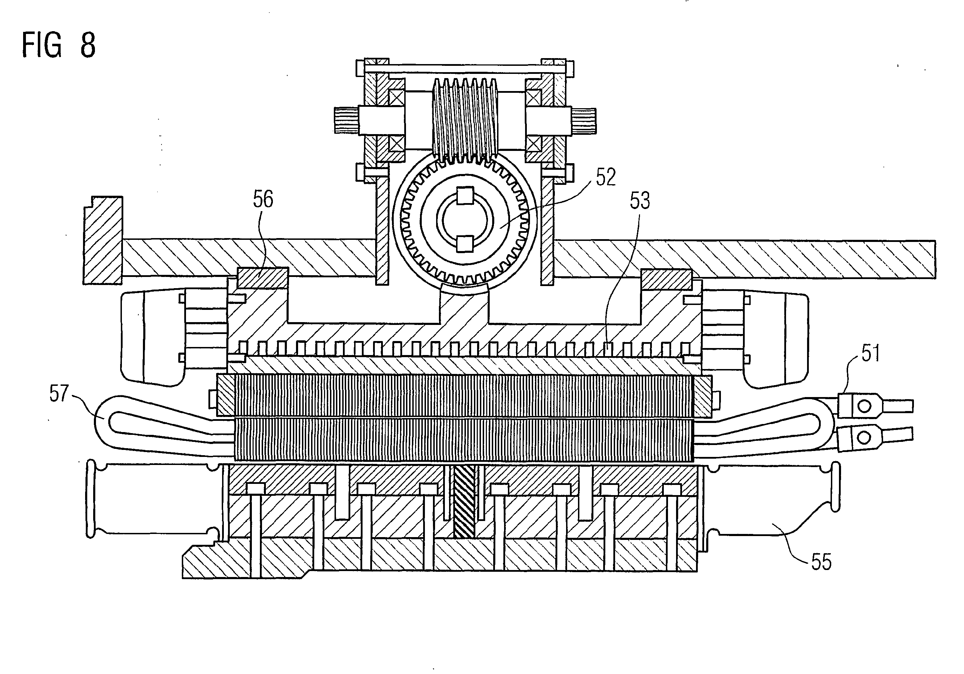

Die konstruktive Ausführung der Kühlung in Verbindung mit einem drehbaren Ständerjoch, das Wartungsarbeiten erheblich erleichtert, wird in den FIGUREN 7 und 8 an einem Motor gezeigt, bei dem die erfindungsgemäßen Maßnahmen zur Erzielung der Schockfestigkeit jedoch nicht dargestellt sind. Hier bezeichnet 50 die Wasserkammer am Ende der Statorkühlkanäle und 51 die Zuleitungen von Wasser zu den Wicklungen, die alternativ möglich ist. 55 bezeichnet jeweils einen Lüfter für den Wickelkopf 57, der in der Regel nur durch die Kühlluft aus dem Lüfter 55 gekühlt wird. Wie bereits gesagt, ist jedoch auch eine Durchströmung der Wicklungen mit entionisiertem Wasser möglich. Dann ergibt sich auch hierdurch eine Ständerwicklungskühlung, die z.B. in der in FIGUR 6 gezeigten Form ausgebildet sein kann.

53 und 54 bezeichnen die Kanäle weiterer Kühlwasserführungsvarianten. Der Entwärmung eines Stators, der in einem Ständerjoch gelagert und z.B. über die Schneckenwelleneinrichtung 52 drehbar ist, ist besondere Beachtung zu schenken, da die Entwärmung über das Motorgehäuse nur gering ist. Auch die Gleitsteine 56 tragen kaum zur Entwärmung bei. Insgesamt ergibt sich durch die Ausbildung in den FIGUREN 7 und 8 eine besonders reparaturfreundliche Ausgestaltung einer elektrischen Maschine, die in Verbindung mit einer elastischen Aufstellung auf einem Grundrahmen und durch eine elastische Verbindung mit der Maschinenwelle, unter Gebrauch der erfindungsgemäßen Grundidee zu einer ebenfalls sehr schockfesten elektrischen Schiffsmaschinenausführung führt.

## Patentansprüche

1. Schockfeste elektrische Schiffsmaschine, z.B. ein Motor oder Generator, für ein Marine- beziehungsweise Navy-Schiff, die einen Stator (5) und einen Rotor (4) in einem Gehäuse (12) aufweist, wobei der Rotor (4) mit einer Antriebswelle (1) verbunden ist und wobei Stator (5) und Rotor (4) gegeneinander dreh beweglich und radial/axial mit begrenztem Spiel miteinander derart verbunden sind, dass sie eine gegenüber dem Gehäuse (12) bewegliche Baueinheit bilden, die gegenüber dem Gehäuse (12) ausweichfähig ist und wobei der Rotor (4) aus einem rohrartigen Tragkörper (7) und einem auf den Tragkörper (7) aufgesetzten Aktivteil (6) besteht, wobei der Tragkörper (7) auf der Antriebswelle (1) elastisch abgestützt ist, und dass der Stator (5) auf dem Tragkörper (7) des Rotors (4) gelagert ist und sich am Gehäuse (12) elastisch abstützt.

2. Schockfeste elektrische Schiffsmaschine nach Anspruch 1, **dadurch gekennzeichnet, dass** sie in einem an der Unterseite eines Schiffsrumpfes gondelartig angeordneten, strömungsgünstig gestalteten Gehäuse (32) angeordnet ist, wobei an die mit dem Rotor verbundene Antriebswelle (1, 21) wenigstens ein Propeller (2, 3) angekoppelt ist und wobei der Stator (5) über Drehlager am Rotor fixiert ist, und dass sich die aus Stator (5) und Rotor (4) gebildete Baueinheit sowohl am Gehäuse als auch auf der Antriebswelle (21) elastisch abstützt und wobei zwischen Rotor und Stator ein Luftspalt von 0,5 bis 50 mm ausgebildet ist.

3. Schockfeste elektrische Schiffsmaschine nach Anspruch 1, **dadurch gekennzeichnet, dass** das Gehäuse (12, 32) der Maschine im Schiffsinneren auf einem elastisch aufgestellten Grundrahmen angeordnet ist, wobei die Antriebswelle (1, 21) eine elastische Kupplung zu einer Propellerwelle oder einer Waterjet-Impellerwelle aufweist.

4. Schockfeste elektrische Schiffsmaschine nach Anspruch 1, 2 oder 3, **dadurch gekennzeichnet, dass** die Abstützung des Rotors auf der Antriebsswelle (1) in axialer und radialer Richtung weich und in Umfangsrichtung drehmomentsteif ausgelegt ist.

5. Schockfeste elektrische Schiffsmaschine nach Anspruch 1, 2, 3 oder 4,
**dadurch gekennzeichnet, dass** die Drehlager als Wälzlager ausgebildet sind.

6. Schockfeste elektrische Schiffsmaschine nach einem der Ansprüche 1 bis 4,
**dadurch gekennzeichnet, dass** die Lager für die Lagerung der Antriebswelle als Gleitlager ausgebildet sind.

7. Schockfeste elektrische Schiffsmaschine nach einem oder mehreren der vorhergehenden Ansprüche,
**dadurch gekennzeichnet, dass** der Motor wassergekühlt ausgebildet ist.

8. Schockfeste elektrische Schiffsmaschine nach Anspruch 7,
**dadurch gekennzeichnet, dass** der Stator eine Kühlvorrichtung aufweist, in der das Kühlwasser für den Motor über Kühlkanäle geführt wird.

9. Schockfeste elektrische Schiffsmaschine nach Anspruch 7 oder 8, **dadurch gekennzeichnet, dass** die Kühlkanäle als Radialkanäle ausgebildet sind.

10. Schockfeste elektrische Schiffsmaschine nach Anspruch 7 oder 8, **dadurch gekennzeichnet, dass** die Kühlkanäle als Umfangskanale ausgebildet sind, insbesondere als meanderförmige Kanäle, die auf dem Umfang des Stators verlaufen.

11. Schockfeste elektrische Schiffsmaschine nach Anspruch 7 oder 8, **dadurch gekennzeichnet dass** die Kühlkanäle als Axialkanäle ausgebildet sind.

12. Schockfeste elektrische Schiffsmaschine nach Anspruch 7, 8, 9, 10 oder 11,
**dadurch gekennzeichnet, dass** die Kühlkanäle mit zumindest einer Wasserkammer verbunden sind, die als Verteiler wirkt.

13. Schockfeste elektrische Schiffsmaschine nach einem oder mehreren der vorhergehenden Ansprüche,
**dadurch gekennzeichnet, dass** der Stator eine Wicklung mit Wickelköpfen aufweist, die von Kühlluft umströmt werden.

14. Schockfeste elektrische Schiffsmaschine nach einem oder mehreren der vorhergehenden Ansprüche,
**dadurch gekennzeichnet, dass** der Motor als permanent erregter Motor ausgebildet ist.

15. Schockfeste elektrische Schiffsmaschine nach Anspruch 14,
**dadurch gekennzeichnet, dass** der Stator im Gehäuse über Gleitsteine drehbar ausgebildet ist, z.B. mittels eines drehbeweglichen Ständerjochs.

## Claims

1. Shock-resistant electrical marine machine, for example a motor or generator, for a navy vessel, which has a stator (5) and a rotor (4) in a housing (12), with the rotor (4) being connected to a propulsion shaft (1) and with the stator (5) and rotor (4) being radially/axially connected to one another with restricted play such that they can rotate with respect to one another, such that they form a unit which can move with respect to the housing (12), can flex with respect to the housing (12), and with the rotor (4) comprising a tube-like mounting body (7) and an active part (6) which is mounted on the mounting body (7), the mounting body (7) being elastically supported on the propulsion shaft (1), and such that the stator (5) is mounted on the mounting body (7) for the rotor (4) and is elastically supported on the housing (12).

2. Shock-resistant electrical marine machine according to Claim 1, **characterized in that** the marine machine is arranged in a streamlined housing (32) which is arranged like a gondola on the lower surface of the hull of a vessel, with at least one propeller (2, 3) being coupled to the propulsion shaft (1, 21) that is connected to the rotor, and with the stator (5) being fixed on the rotor via rotating bearings, and **in that** the unit formed from the stator (5) and rotor (4) is elastically supported both on the housing and on the propulsion shaft (21), and with an air gap of 0.5 to 50 mm being formed between the rotor and stator.

3. Shock-resistant electrical marine machine according to Claim 1, **characterized in that** the housing (12, 32) of the machine is arranged on an elastically mounted base frame inside the vessel, with the propulsion shaft (1, 21) having an elastic coupling to a propeller shaft or a water jet impeller shaft.

4. Shock-resistant electrical marine machine according to Claim 1, 2 or 3, **characterized in that** the support for the rotor on the propulsion shaft (1) is soft in the axial and radial directions, and is torsionally stiff in the circumferential direction.

5. Shock-resistant electrical marine machine according to Claim 1, 2, 3 or 4, **characterized in that** the rotating bearings are in the form of roller bearings.

6. Shock-resistant electrical marine machine according to one of Claims 1 to 4, **characterized in that** the bearings for bearing the propulsion shaft are in the form of sliding bearings.

7. Shock-resistant electrical marine machine according to one or more of the preceding claims, **characterized in that** the motor is water-cooled.

8. Shock-resistant electrical marine machine according to Claim 7, **characterized in that** the stator has a cooling apparatus in which the cooling water for the motor is passed via cooling channels.

9. Shock-resistant electrical marine machine according to Claim 7 or 8, **characterized in that** the cooling channels are in the form of radial channels.

10. Shock-resistant electrical marine machine according to Claim 7 or 8, **characterized in that** the cooling channels are in the form of circumferential channels, in particular meandering channels, which run on the circumference of the stator.

11. Shock-resistant electrical marine machine according to Claim 7 or 8, **characterized in that** the cooling channels are in the form of axial channels.

12. Shock-resistant electrical marine machine according to Claim 7, 8, 9, 10 or 11, **characterized in that** the cooling channels are connected to at least one water chamber, which acts as a distributor.

13. Shock-resistant electrical marine machine according to one or more of the preceding claims, **characterized in that** the stator has a winding with end windings around which cooling air flows.

14. Shock-resistant electrical marine machine according to one or more of the preceding claims, **characterized in that** the motor is in the form of a motor with permanent-magnet excitation.

15. Shock-resistant electrical marine machine according to Claim 14, **characterized in that** the stator is designed such that it can rotate via slide rings in the housing, for example by means of a stator yoke which can rotate.

## Revendications

1. Machine marine électrique résistante aux chocs, par exemple un moteur ou une génératrice, destinée à un navire de la marine de commerce ou de guerre, la machine marine comportant un stator (5) et un rotor (4) dans un carter (12), le rotor (4) étant relié à un arbre d'entraînement (1) et le stator (5) et le rotor (4) étant relié entre eux axialement ou radialement, avec un jeu limité, de façon être mobile en rotation l'un par rapport à l'autre de telle sorte qu'ils forment une unité structurelle mobile par rapport au carter (12) qui peut être déportée par rapport au carter (12), et le rotor (4) étant constitué d'un corps de support (7) de type tubulaire et d'une partie active (6) montée sur le corps de support (7), le corps de support (16) étant supporté élastiquement par l'arbre d'entraînement (1), et de telle sorte que le stator (5) est monté sur le corps de support (7) du rotor (4) et est supporté élastiquement par le carter (12).

2. Machine marine électrique résistante aux chocs selon la revendication 1, **caractérisée en ce qu'**elle est placée dans une carter (32) de forme hydrodynamique et disposé comme une nacelle du côté inférieur de la coque d'un navire, au moins une hélice (2, 3) étant couplée à l'arbre d'entraînement (1, 21) relié au rotor, et le stator étant fixé au rotor par le biais de coussinets de pivotement, et **en ce que** l'unité structurelle constituée du stator (5) et du rotor (4) est supportée élastiquement aussi bien par le carter (12) que par l'arbre d'entraînement (21), un espace de 0,5 à 50 mm étant ménagé entre le rotor et le stator.

3. Machine marine électrique résistante aux chocs selon la revendication 1, **caractérisée en ce que** le carter (12, 32) de la machine est disposé à l'intérieur du navire sur un châssis installé élastiquement, l'arbre d'entraînement (1, 21) comportant un couplage élastique à un arbre d'hélice ou à un arbre propulseur d'hydrojet.

4. Machine marine électrique résistante aux chocs selon la revendication 1, 2 ou 3, **caractérisée en ce que** le support du rotor par l'arbre d'entraînement (1) est effectué de façon souple dans les directions radiale et axiale et avec un grand couple de rotation dans la direction périphérique.

5. Machine marine électrique résistante aux chocs selon la revendication 1, 2, 3 ou 4, **caractérisée en ce que** les coussinets de pivotement sont conformés en paliers à roulement.

6. Machine marine électrique résistante aux chocs selon les revendications 1 à 4, **caractérisée en ce que** les coussinets destinés à supporter l'arbre d'entraînement sont conformés en paliers à glissement.

7. Machine marine électrique résistante aux chocs selon l'une ou plusieurs des revendications précédentes, **caractérisée en ce que** le moteur est à refroidissement hydraulique.

8. Machine marine électrique résistante aux chocs selon la revendication 7, **caractérisée en ce que** le stator comporte un dispositif de refroidissement dans lequel l'eau de refroidissement du moteur est guidée par des canaux de refroidissement.

9. Machine marine électrique résistante aux chocs selon la revendication 7 ou 8, **caractérisée en ce que** les canaux de refroidissement sont conformés en canaux radiaux.

10. Machine marine électrique résistante aux chocs selon la revendication 7 ou 8, **caractérisée en ce que** les canaux de refroidissement sont conformés en canaux périphériques, notamment en canaux sinueux qui courent sur la périphérie du stator.

11. Machine marine électrique résistante aux chocs selon la revendication 7 ou 8, **caractérisée en ce que** les canaux de refroidissement sont conformés en canaux axiaux.

12. Machine marine électrique résistante aux chocs selon la revendication 7, 8, 9, 10 ou 11, **caractérisée en ce que** les canaux de refroidissement sont reliés à au moins une chambre à eau qui sert de distributeur.

13. Machine marine électrique résistante aux chocs selon l'une ou plusieurs des revendications précédentes, **caractérisée en ce que** le stator comporte un enroulement dotés de têtes d'enroulement, autour desquelles circule de l'air de refroidissement.

14. Machine marine électrique résistante aux chocs selon l'une ou plusieurs des revendications précédentes, **caractérisée en ce que** le moteur est conformé en moteur excité en permanence.

15. Machine marine électrique résistante aux chocs selon la revendication 14, **caractérisée en ce que** le stator est conformé de façon à pouvoir tourner dans le boîtier au moyen de patins, par exemple au moyen d'une culasse de stator mobile en rotation.
